# EUROPÄISCHE PATENTSCHRIFT

(11) **EP 3 222 858 B1**
(45) Veröffentlichungstag und Bekanntmachung des Hinweises auf die Patenterteilung: **26.12.2018**
(21) Anmeldenummer: 17162632.8
(22) Anmeldetag: 23.03.2017
(51) Int. Cl.: F16B 5/06

(54) **BEFESTIGUNG VON ZWEI BLECHEN MITTELS EINER KLEMME**
FIXING OF TWO METAL SHEETS BY MEANS OF A CLAMP
FIXATION DE DEUX TÔLES À L'AIDE D'UN ÉLÉMENT DE SERRAGE

(30) Priorität: 23.03.2016 DE 202016101609 U
(43) Veröffentlichungstag der Anmeldung: 27.09.2017
(73) Patentinhaber: Smitka, Günter, 58644 Iserlohn (DE)
(72) Erfinder: Smitka, Günter, 58644 Iserlohn (DE)
(74) Vertreter: Kalkoff & Partner

(56) Entgegenhaltungen:
- US-A- 3 837 136

## Beschreibung

Die Erfindung betrifft eine Klemme zur Befestigung an der Kante eines Blechs, eine Verbindung von zwei rechtwinklig zueinander angeordneten Blechen mit einer solchen Klemme und ein Verfahren zur Verbindung von zwei rechtwinklig zueinander angeordneten Blechen.

Zur Befestigung von zwei Blechen aneinander hat der Erfinder bereits in der DE 28 33 801 eine Befestigungsklemme vorgeschlagen, die einen durch Faltung entstanden Kopf und daran anschließend den Schaft bildende Schenkel mit einem Längsschlitz aufweist. Der Längsschlitz ist nach vorne offen. An den Einsteckenden der Schenkel ist der Längsschlitz abgeschrägt.

Zur Verbindung von zwei rechtwinklig angeordneten Blechen wird die Befestigungsklemme durch eine Öffnung in einem Blech hindurch getrieben, wobei die Kante des anderen Blechs in den Längsschlitz aufgenommen wird. Durch die entgegengesetzten Abwinklungen wird eine hohe Auszugskraft erreicht.

Nachfolgend hat der Erfinder in der DE 10 353 567 A1 eine Klemme mit erhöhter Auszugskraft vorgeschlagen, bei der der Schlitz eine erste Abwinklung und nachfolgend eine zweite Abwinklung aufweist. Durch einen so gebildeten Doppelknick kann die Auszugskraft weiter erhöht werden.

Die US 3 837 136 offenbart eine Verbindung von zwei Platten in rechtwinkliger Anordnung. Ein Verbinder umfasst einen Kopf und einen Schaft. Am Schaft ist ein Schlitz vorgesehen, um den Randbereich eines Blechs aufzunehmen. Im Bereich der Basis ist der Schlitz aufgeweitet, so dass sich die zweite Platte örtlich deformieren und seitlich aufweiten kann, um die Verbindung herzustellen.

Die EP 0 225 438 A1 offenbart einen Blechdübel mit einem zweischenkligen, geschlitzten Schaft und einem Kopf zum Befestigen zweier senkrecht aneinander angeordneter Bleche. Zur Erhöhung der Haltekraft weist der Schlitz einen S-förmigen Verlauf auf. In einer Ausführung sind die Übergänge zwischen den Bereichen nicht als Radien, sondern als scharfe Kanten ausgelegt, so dass Spitzen in den Schlitz hineinragen und ein eingeschlagenes Blech halten.

Es kann als Aufgabe angesehen werden, eine Klemme und eine Verbindung vorzuschlagen, bei denen auf einfache Weise eine hohe Auszugskraft erreicht wird.

Die Aufgabe wird gelöst durch eine Klemme gemäß Anspruch 1, durch eine Verbindung gemäß Anspruch 7 und durch ein Verfahren gemäß Anspruch 10. Abhängige Ansprüche beziehen sich auf vorteilhafte Ausführungsformen der Erfindung.

Erfindungsgemäß ist eine Klemme zur Befestigung an der Kante eines Blechs vorgesehen, die einen Kopf aufweist, von denen sich zwei parallele Schenkel bis zu einem Fußbereich erstrecken. Kopf und Schenkel sind bevorzugt aus einem Flachmaterial gebildet und können insbesondere bevorzugt einstückig durch Biegung eines Flachmaterial, bevorzugt Federstahl, hergestellt sein. Bevorzugt erstrecken sich die Schenkel parallel im Abstand voneinander, wobei der Abstand weiter bevorzugt größer ist als die Materialdicke.

Erfindungsgemäß weist jeder Schenkel einen Schlitz zur Aufnahme des Blechs auf. Der Schlitz erstreckt sich jeweils von einer Schlitzöffnung im Fußbereich in Richtung des Kopfes bis zu einem Schlitzende. Um die Einführung der Blechkante in den Schlitz zu erleichtern, kann das offene untere Ende mit einem verbreiterten Einführbereich versehen sein.

Erfindungsgemäß ist jeweils im Bereich des Schlitzendes eine Bohrung vorgesehen. Die Bohrung kann bspw. in Verlängerung des Schlitzes gebildet sein. Zwischen dem Schlitzende und der Bohrung ist erfindungsgemäß ein Materialsteg vorgesehen. Die Bohrung weist bevorzugt runde Form und einen Durchmesser auf, der größer ist als die Schlitzbreite.

Die Bohrung im Bereich des Schlitzendes dient zur Aufnahme eines Stauchungsbereichs der Blechkante. Beim Eintreiben der Blechkante in den Schlitz stößt diese zunächst auf den Materialsteg, der bei ausreichender Einwirkung auf die Klemme, bspw. durch Hammerschläge, durchtrennt wird. Nach dem Durchtrennen des Materialstegs tritt die Blechkante in die Bohrung ein und stößt an deren hinterer Kante an. Bei weiterer Einwirkung kommt es zu einer Verformung und Stauchung der Blechkante im Bereich der Bohrung. Durch die Bohrung ist dabei ein Raum vorgegeben, in den sich die gestauchte Blechkante ausdehnen kann.

Durch die Stauchung kann sich so im Bereich des Schlitzendes ein formschlüssiger Eingriff ergeben, so dass hohe Auszugskräfte notwendig wären, um die Blechkante aus dem Schlitz zurückzuziehen. Beim Durchtrennen des Materialstegs können beidseits Reste des Materialstegs verbleiben, die sich an das eindringende Blech anlegen und zu einer zusätzlichen Klemmwirkung führen.

Zur Verbindung von zwei rechtwinklig aneinander angeordneten Blechen können die Schenkel der Klemme durch eine Öffnung in einem ersten Blech hindurch gesteckt werden und eine Kante des zweiten Blechs wie beschrieben in den Schlitzen aufnehmen. Durch die beim Eintreiben wirkenden Kräfte kann das Durchtrennen der Materialstege sowie die Stauchung der Kante des zweiten Blechs im Bereich der Bohrungen erreicht werden.

Die erfindungsgemäße Bohrung kann für verschiedene Schlitzformen verwendet werden. Bevorzugt sind insbesondere Formen, bei denen der Schlitz vom Fußbereich zunächst gerade verläuft und einen abgewinkelten Endbereich aufweist. Der Endbereich kann dabei einfach, zweifach oder vielfach abgewinkelt sein. Bevorzugt sind die Abwinklungen an den beiden Schenkeln in entgegengesetzter Richtung vorgesehen.

Nachfolgend werden Ausführungsformen der Erfindung anhand von Zeichnungen näher erläutert. Dabei zeigen:
Fig. 1, Fig. 2 Front- und Seitenansichten einer Ausführungsform einer ersten Ausführungsform einer Klemme;
Fig.3 eine perspektivische Ansicht der Verbindung zweier Bleche mit der Klemme aus Fig. 1, Fig. 2;
Fig. 4a-4c Seitenansichten der ersten Ausführungsformen der Klemme in verschiedenen Stellungen beim Eintreiben einer Blechkante in den Schlitz;
Fig. 5, 6 Abwicklungen für zwei verschiedene Ausführungsformen einer Klemme.

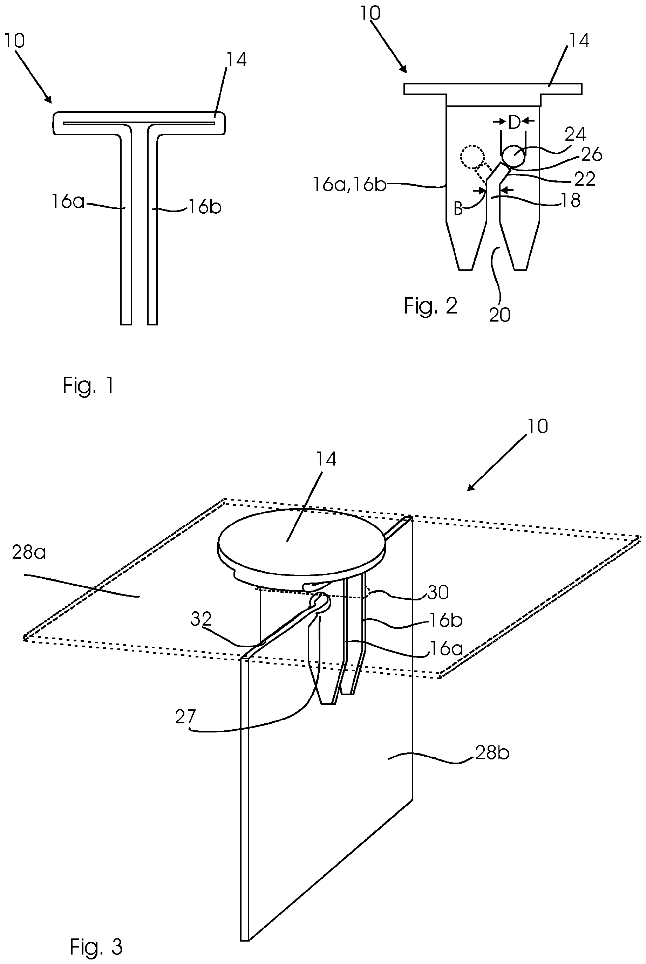

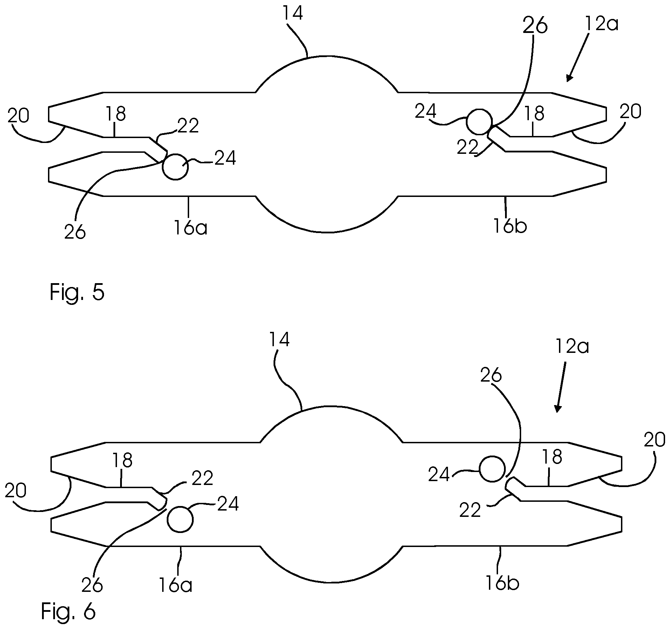

Die Zeichnungen zeigen in Fig. 1, 2, 3, 4a, 4b, 4c eine erste Ausführungsform einer Klemme 10, die aus dem in Fig. 6 gezeigten flachen Federstahl durch Biegen hergestellt ist. Von einem Kopf 14 gehen rechtwinklig zwei parallel im Abstand angeordnete Schenkel 16a, 16b aus. In jedem der Schenkel ist ein nach unten offener Schlitz 18 gebildet mit einem verbreiterten Einführbereich 20, einem abgewinkelten Bereich 22 und einer am Schlitzende vorgesehenen Bohrung 24. Wie in Fig. 2, Fig. 5 dargestellt sind die Abwinklungen 22 der beiden Schenkel 16a, 16b in entgegengesetzter Richtung ausgerichtet.

Die Bohrung 24 grenzt bei der ersten Ausführungsform direkt an das Schlitzende an, wobei als Materialsteg 26 eine minimale Materialstärke zwischen Schlitzende und Bohrung verbleibt. Dabei ist der Durchmesser D der Bohrung größer als die Breite B des Schlitzes 18. In einer alternativen Ausführungsform (Fig. 6) kann die Bohrung 24 kann ein breiterer Materialsteg 26 zwischen dem bevorzugt abgerundeten Schlitzende und der Bohrung 24 vorgesehen sein. Die Breite des Materialstegs 26 ist bevorzugt kleiner als die Schlitzbreite B.

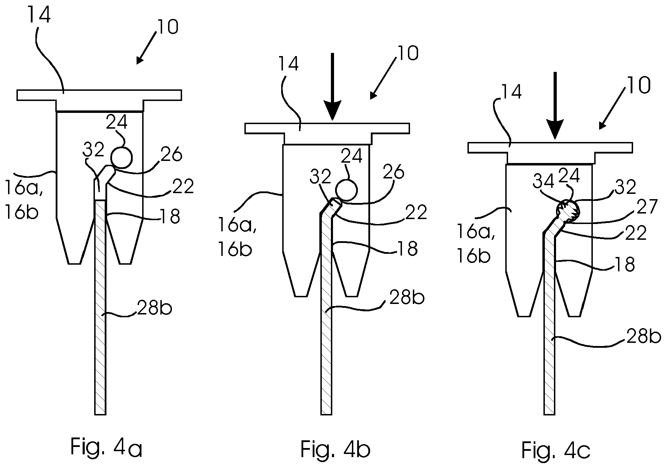

Die Klemme 10 kann wie in Fig. 3 dargestellt zur rechtwinkligen Befestigung eines ersten Blechs 28a an einem zweiten Blech 28b dienen. Die Schenkel 16a, 16b werden dabei durch eine Öffnung 30 im ersten Blech 28a so hindurch getrieben, dass eine Kante 32 des zweiten Blechs 28b in die Schlitze 18 aufgenommen wird. Bspw. durch Hammerschläge wird die Klemme 10 so weit eingetrieben, dass zunächst der Materialsteg 26 durchtrennt wird und nachfolgend sich die Kante 32 wie bspw. in Fig. 4a bis 4c gezeigt verformt.

Dabei folgt die Kante 32 beim Eintreiben dem Verlauf der Schlitze 18 und verformt sich zunächst an den entgegengesetzten Abwinklungen 22 der beiden Schenkel 16, 16b.

Nachfolgend trifft die Kante 32 auf den Materialsteg 26 und durchtrennt diesen. Beim Durchtrennen der Materialstege 26 verbleiben am Rand der Schlitze jeweils Reste 27 bspw. in Form von Zacken. Hierbei kommt insbesondere bei der bevorzugten Verwendung von Federstahl als Material der Klemme 10 es zu einer zusätzlichen Klemmwirkung durch die Reste des Materialstegs 26, wodurch die Auszugskraft weiter erhöht werden kann.

Beim weiteren Eintreiben gelangt die Kante 32 in den Bereich der Bohrung 24 und stößt schließlich an deren Rand an. Bei weiterer Krafteinwirkung kommt es zu einer Stauchung 34 an der Kante 32, die im Bereich der Bohrung 24 aufgenommen wird.

Hierdurch wird wie in Fig. 4c gezeigt ein formschlüssiger Verbund erreicht, so dass eine hohe Auszugskraft notwendig ist, um die gebildete Verbindung zu trennen.

## Patentansprüche

1. Klemme zur Befestigung an der Kante (32) eines Blechs (28b), mindestens umfassend
- einen Kopf (14), von dem sich zwei parallele Schenkel (16a, 16b) bis zu einem Fußbereich erstrecken,
- wobei jeder Schenkel (16a, 16b) einen Schlitz (18) zur Aufnahme des Blechs (28b) aufweist, der sich von einer Schlitzöffnung (20) im Fußbereich in Richtung des Kopfes (14) bis zu einem Schlitzende erstreckt,
- wobei jeweils im Bereich des Schlitzendes eine Bohrung (24) zur Aufnahme eines Stauchungsbereichs (34) der Blechkante (32) vorgesehen ist,
**dadurch gekennzeichnet, dass**
- zwischen der Bohrung (24) und dem Schlitzende jeweils ein Materialsteg (26) angeordnet ist.

2. Klemme nach Anspruch 1, bei der
- die Bohrung (24) einen Durchmesser (D) aufweist, der größer ist als die Schlitzbreite (B).

3. Klemme nach einem der vorangehenden Ansprüche, bei der
- die Bohrung (24) in Verlängerung des Schlitzes (18) gebildet ist.

4. Klemme nach einem der vorangehenden Ansprüche, bei der
- der Materialsteg (26) eine geringere Breite aufweist als die Breite des Schlitzes (18).

5. Klemme nach einem der vorangehenden Ansprüche, bei der
- das Schlitzende abgerundet ist.

6. Klemme nach einem der vorangehenden Ansprüche, bei der
- der Schlitz (18) vom Fußbereich zunächst gerade verläuft und einen abgewinkelten Endbereich (22) aufweist.

7. Verbindung von zwei rechtwinklig zueinander angeordneten Blechen (28a, 28b), wobei das erste Blech (28a) eine Öffnung (30) aufweist, durch die die Schenkel (16a, 16b) einer Klemme nach einem der vorangehenden Ansprüche gesteckt sind, wobei eine Kante (32) des zweiten Blechs (28b) in den Schlitzen (18) aufgenommen und die Materialstege (26) durchtrennt sind.

8. Verbindung nach Anspruch 7, bei der die Kante (32) des zweiten Blechs (28b) im Bereich der Bohrung (24) gestaucht ist.

9. Verbindung nach Anspruch 7 oder 8, bei der beidseitig der Schlitze (18) jeweils verformte Reste (27) der durchtrennten Materialstege (26) angeordnet sind, die in Kontakt mit dem zweiten Blech (28b) stehen.

10. Verfahren zur Verbindung von zwei rechtwinklig zueinander angeordneten Blechen (28a, 28b), bei dem
- das erste Blech (28a) eine Öffnung (30) aufweist,
- die Schenkel einer Klemme (10) nach einem der Ansprüche 1-6 so durch die Öffnung (30) gesteckt werden, dass eine Kante (32) des zweiten Blechs (28b) in den Schlitzen (18) aufgenommen wird und die Materialstege (26) durchtrennt werden.

## Claims

1. A clamp for fastening to the edge (32) of a metal sheet (28b) comprising at least:
- a head (14) from which extend two parallel legs (16a, 16b) up to a foot region,
- wherein each leg (16a, 16b) has a slot (18) for accommodating the metal sheet (28b) that extends from a slot opening (20) in the foot region toward the head (14) up to a slot end,
- wherein for each a hole (24) for accommodating an upset region (34) of the metal sheet edge (32) is provided in the region of the slot end,
**characterized in that**
- for each a bar of material (26) is arranged between the hole (24) and the slot end.

2. The clamp according to claim 1, wherein:
- the hole (24) has a diameter (D) that is larger than the slot width (B).

3. The clamp according to one of the preceding claims, wherein:
- the hole (24) is formed as an extension of the slot (18).

4. The clamp according to one of the preceding claims, wherein:
- the bar of material (26) has a thinner width than the width of the slot (18).

5. The clamp according to one of the preceding claims, wherein:
- the slot end is rounded.

6. The clamp according to one of the preceding claims, wherein:
- the slot (18) first runs straight from the foot region and has an angled end region (22).

7. A connection of two metal sheets (28a, 28b) arranged at a right angle to each other, wherein the first metal sheet (28a) has an opening (30) through which are inserted the legs (16a, 16b) of a clamp according to one of the preceding claims, wherein an edge (32) of the second metal sheet (28b) is accommodated in the slots (18) and the bars of material (26) are severed.

8. The connection according to claim 7, wherein the edge (32) of the second metal sheet (28b) is upset in the region of the hole (24).

9. The connection according to claim 7 or 8, wherein deformed remainders (27) of the severed bars of material (26) are arranged on both sides of the slots (18) and are in contact with the second metal sheet (28b).

10. The method for connecting two metal sheets (28a, 28b) arranged at a right angle relative to each other, wherein:
- the first metal sheet (28a) has an opening (30),
- the legs of a clamp (10) according to one of claims 1-6 are inserted through the opening (30) such that an edge (32) of the second metal sheet (28b) is accommodated in the slots (18), and the material bars (26) are severed.

## Revendications

1. Élément de serrage à fixer au bord (32) d'une tôle (28b), comprenant au moins
- une tête (14), à partir de laquelle deux branches parallèles (16a, 16b) s'étendent jusqu'à une partie inférieure,
- dans lequel chaque branche (16a, 16b) présente une fente (18) servant à loger la tôle (28b), qui s'étend d'une ouverture de fente (20) dans la partie inférieure en direction de la tête (14) jusqu'à une extrémité de fente,
- dans lequel un perçage (24) est prévu pour loger une partie refoulée (34) du bord de tôle (32) respectivement au niveau de l'extrémité de fente,
**caractérisé en ce que**
- une paroi de matière (26) est disposée respectivement entre le perçage (24) et l'extrémité de fente.

2. Élément de serrage selon la revendication 1, dans lequel
- le perçage (24) présente un diamètre (D), qui est supérieur à la largeur de la fente (B).

3. Élément de serrage selon l'une des revendications précédentes, dans lequel
- le perçage (24) est formé dans le prolongement de la fente (18).

4. Élément de serrage selon l'une des revendications précédentes, dans lequel
- la paroi de matière (26) présente une largeur moindre (24) que la largeur de la fente (18).

5. Élément de serrage selon l'une des revendications précédentes, dans lequel
- l'extrémité de la fente est arrondie.

6. Élément de serrage selon l'une des revendications précédentes, dans lequel
- la fente (18) est d'abord droite en partant de la partie inférieure et présente une partie terminale coudée (22).

7. Assemblage de deux tôles (28a, 28b) disposées à la perpendiculaire l'une de l'autre, dans lequel la première tôle (28a) présente une ouverture (30), à travers laquelle les branches (16a, 16b) d'un élément de serrage selon l'une des revendications précédentes sont insérées, dans lequel un bord (32) de la seconde tôle (28b) est logé dans les fentes (18) et les parois de matière (26) sont sectionnées.

8. Assemblage selon la revendication 7, dans lequel le bord (32) de la seconde tôle (28b) est refoulé au niveau du perçage (24).

9. Assemblage selon la revendication 7 ou 8, dans lequel des résidus déformés (27) des parois de matière (26) sectionnées sont disposés de part et d'autre des fentes (18), qui sont en contact avec la seconde tôle (28b).

10. Procédé servant à assembler deux tôles (28a, 28b) disposées à la perpendiculaire l'une de l'autre, dans lequel
- la première tôle (28a) présente une ouverture (30),
- les branches d'un élément de serrage (10) selon l'une des revendications 1-6 sont insérées à travers l'ouverture (30) de telle manière qu'un bord (32) de la seconde tôle (28b) est logé dans les fentes (18) et les parois de matière (26) sont sectionnées.
